# FASCICULE DE BREVET EUROPEEN

(11) **EP 4 459 493 B1**
(45) Date de publication et mention de la délivrance du brevet: **24.12.2025**
(21) Numéro de dépôt: 24172620.7
(22) Date de dépôt: 26.04.2024
(51) Int. Cl.: G06F 21/76, G06F 21/78

(54) **SYSTÈME SUR PUCE COMPORTANT UN CONTRÔLEUR DE MÉMOIRE ET PROCÉDÉ DE CONTRÔLE DE MÉMOIRE CORRESPONDANT**
SYSTEM AUF EINEM CHIP MIT SPEICHERSTEUERUNG UND SPEICHERSTEUERUNGSVERFAHREN DAFÜR.
SYSTEM ON A CHIP COMPRISING A MEMORY CONTROLLER AND CORRESPONDING MEMORY CONTROL METHOD.

(30) Priorité: 02.05.2023 FR 2304400
(43) Date de publication de la demande: 06.11.2024
(73) Titulaire: STMicroelectronics International N.V., 1228 Plan-les-Ouates, Geneva (CH)
(72) Inventeur: PALLARDY, Loic, 72700 Rouillon (FR); BERTHELOT, Vincent, 72190 Saint Pavace (FR)
(74) Mandataire: Casalonga

(56) Documents cités:
- EP-A1- 3 901 776
- FR-A1- 2 945 396
- US-B1- 11 281 810

## Description

Des modes de réalisation et de mise en œuvre de l'invention concernent les circuits intégrés tels que les systèmes sur puce (« System on Chip » en anglais) comportant notamment un contrôleur de mémoire, par exemple une mémoire externe, et plus particulièrement concernant des autorisations et restrictions d'accès à des régions mémoires de la mémoire.

En effet, pour contribuer à garantir la sécurité des systèmes sur puce, des techniques d'isolation des ressources permettent de d'autoriser ou restreindre l'accès à des ressources du système, et par exemple des régions mémoires particulières. On parle d'un accès « illégal » lorsqu'une transaction n'est pas conforme aux restrictions d'accès établies par des droits d'accès respectifs. Les techniques d'isolation des ressources dans ce cadre sont usuellement appelées « pare-feu ».

EP 3 901 776 A1, US 11 281 810 B1 et FR 2 945 396 sont des documents pertinents de l'art antérieur.

Dans les techniques d'isolation des ressources conventionnelles, par exemple telle que décrite dans la publication FR 3103586 A1 (28/05/2021), des pares-feux peuvent être prévus sur le contrôleur de mémoire pour fournir une protection en cours d'exécution, en fonction du contexte d'exécution, par exemple définit par un identifiant de compartimentation « CID », un niveau de sécurité, et/ou par un niveau de privilège.

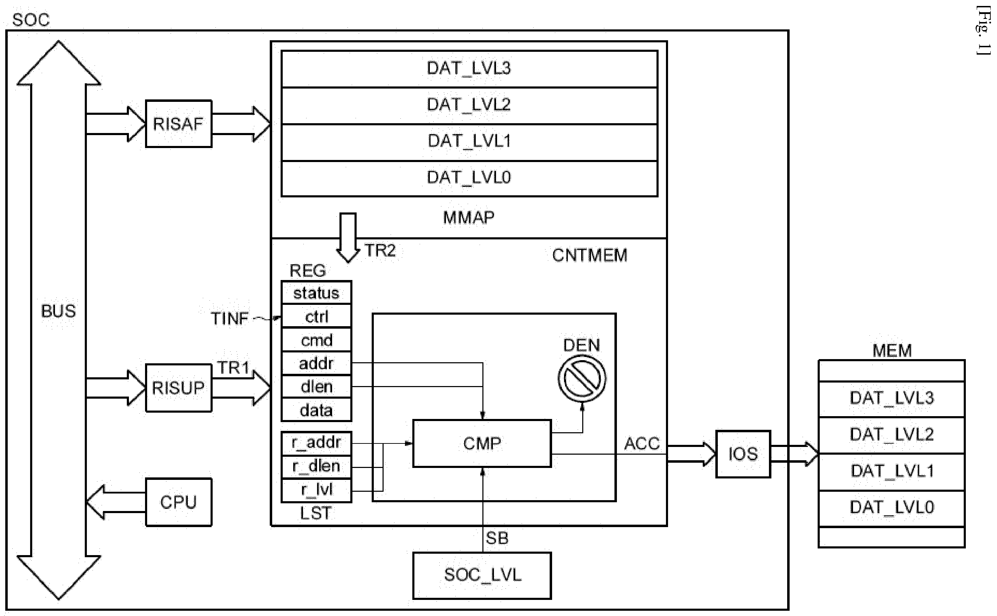

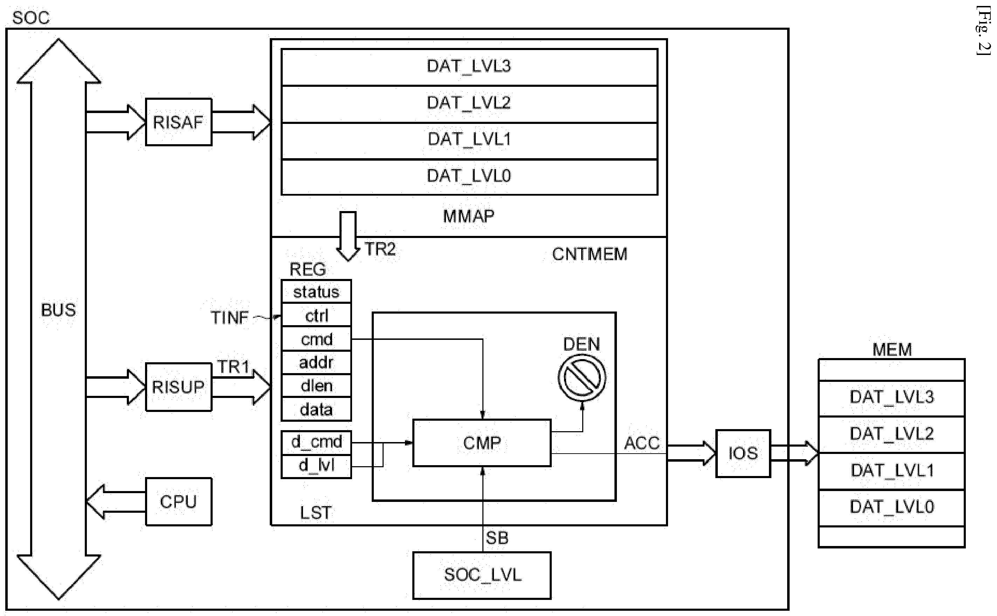

Par exemple, un premier type de pare-feu peut être adapté à la protection de dispositif esclave RISUP (figures 1 et 2), pour filtrer quel contexte peut accéder au contrôleur afin d'envoyer des commandes à la mémoire externe pour lire, écrire ou effacer des données. Ce premier type de pare-feu RISUP ne vérifie pas les commandes envoyées à la mémoire, mais seulement quel contexte accède au contrôleur au moment de l'exécution.

Un deuxième type de pare-feu peut être adapté à la protection d'adresses esclaves RISAF (figures 1 et 2), pour filtrer quelles régions de la mémoire peuvent être accédées par quels contextes au moment de l'exécution.

Cela étant, ces pares-feux ne sont classiquement pas capables de limiter les accès à la mémoire externe en fonction d'un niveau de sécurité du système sur puce spécifique au processus de démarrage, et qui évolue au fur et à mesure de l'avancée du processus de démarrage.

En effet, lors du processus de démarrage du système sur puce, le niveau de sécurité du système sur puce a de moins en moins de permission d'accès, de manière à « verrouiller » les secrets, c'est-à-dire les rendre inaccessibles, au fur et à mesure qu'ils ont été utilisés.

Or, comme les pares-feux conventionnels ne permettent pas de filtrer en fonction du niveau de sécurité du système sur puce, il est possible qu'une commande provenant d'un contexte autorisé, agisse sur une région mémoire qui devrait être protégée pendant le processus de démarrage.

Ainsi, il existe un besoin de renforcer les mécanismes de protection des mémoires externes de système sur puce, notamment dans le cadre du processus de démarrage et vis-à-vis du niveau de sécurité du système sur puce.

Selon un aspect, il est proposé à cet égard un système sur puce comportant un contrôleur de mémoire adapté pour recevoir des transactions contenant des informations de transaction définissant un accès à une mémoire, par exemple une mémoire externe, le contrôleur de mémoire étant configuré pour stocker les informations de transaction dans un registre de commande, et pour piloter l'accès à la mémoire à partir du contenu dudit registre de commande, dans lequel le contrôleur de mémoire comporte des moyens de vérification configurés pour conditionner l'accès à la mémoire en fonction d'une comparaison entre les informations de transaction stockées dans le registre de commande et une liste d'informations spéciales définissant des transactions spéciales, par exemple des transactions interdites ou des transactions autorisées.

Ainsi, c'est le contrôleur de mémoire lui-même qui met en œuvre un mécanisme de protection supplémentaire vis-à-vis des transactions spéciales (i.e. la liste d'informations spéciales), en outre des éventuels pares-feux. Cette protection supplémentaire peut ainsi permettre de compléter un manque dans la protection établie par les pares-feux, notamment dans le cadre du processus de démarrage.

Selon un mode de réalisation, les moyens de vérification sont configurés pour recevoir un niveau de sécurité du système sur puce, et pour effectuer ledit conditionnement de l'accès à la mémoire en fonction du niveau de sécurité du système sur puce.

Cela permet d'assurer la sécurité du système sur puce en fonction du niveau de sécurité du système, en particulier de manière à tenir compte de son évolution lors du processus de démarrage du système.

On entend que le niveau de sécurité correspond à un niveau de sécurité évolutif qui est automatiquement modifié dans l'avancée du processus de démarrage, de façon à avoir des accès de plus en plus restreints. Par exemple, le niveau de sécurité évolue temporellement de façon à bloquer les accès aux régions mémoires contenant des informations du processus de démarrage, dès que ces informations ont été utilisées dans le processus de démarrage.

On notera par ailleurs que le niveau de sécurité évolutif se modifiant automatiquement dans le processus de démarrage, ne correspond pas aux contextes « sécurisé » ou « non-sécurisé », ni aux contextes « privilégiés » ou « non-privilégiés », qui sont conventionnellement filtrés par les pares-feux RISUP, RISAF. En effet lesdits contextes sont typiquement attribués pour chaque dispositif (maître, ressource, périphérique...), éventuellement de façon commandée par un mécanisme de gestion des droits d'accès. En tout état de cause, les contexte sécurisé/privilégié ne sont conventionnellement pas adaptés à être automatiquement modifiés dans l'avancée du processus de démarrage.

Selon un mode de réalisation, la liste d'informations spéciales définissant des transactions spéciales est faite respectivement pour chaque niveau de sécurité possible du système sur puce.

Selon un mode de réalisation, les moyens de vérification sont configurés pour effectuer ledit conditionnement de sorte que l'accès est bloqué si au moins l'une desdites informations de transaction stockées dans le registre de commande appartient à ladite liste d'informations spéciales ; ou bien si au moins l'une desdites informations de transaction stockées dans le registre de commande n'appartient pas à ladite liste d'informations spéciales.

Selon un mode de réalisation, la liste d'informations spéciales est établie sur au moins l'un des types d'informations de transaction suivants : une commande préétablie d'une action dans la mémoire ; une adresse de région mémoire ; une taille de région mémoire.

Selon un autre aspect, il est également proposé un procédé de contrôle d'une mémoire, mis en œuvre par un contrôleur de mémoire d'un système sur puce, comprenant une réception de transactions contenant des informations de transaction définissant un accès respectif à la mémoire, un stockage des informations de transaction reçues dans un registre de commande, l'accès à la mémoire étant piloté à partir du contenu dudit registre de commande, le procédé comprenant en outre un conditionnement de l'accès à la mémoire en fonction d'une comparaison entre les informations de transaction stockées dans le registre de commande et une liste d'informations spéciales définissant des transactions spéciales, par exemple des transactions interdites ou des transactions autorisées.

Selon un mode de mise en œuvre, le procédé comprend une réception d'un niveau de sécurité du système sur puce, et dans lequel ledit conditionnement de l'accès est effectué en fonction du niveau de sécurité du système sur puce.

Selon un mode de mise en œuvre, la liste d'informations spéciales définissant des transactions spéciales est faite respectivement pour chaque niveau de sécurité possible du système sur puce.

Selon un mode de mise en œuvre, ledit conditionnement est effectué de sorte que l'accès est bloqué si au moins l'une desdites informations de transaction stockées dans le registre de commande appartient à ladite liste d'informations spéciales, ou bien si au moins l'une desdites informations de transaction stockées dans le registre de commande n'appartient pas à ladite liste d'informations spéciales.

Selon un mode de mise en œuvre, la liste d'informations spéciales est établie sur au moins l'un des types d'informations de transaction suivants : une commande préétablie d'une action dans la mémoire ; une adresse de région mémoire ; une taille de région mémoire.

D'autres avantages et caractéristiques de l'invention apparaîtront à l'examen de la description détaillée de modes de réalisation et de mise en œuvre, nullement limitatifs, et des dessins annexés, sur lesquels:
[Fig.1] et ;
[Fig.2] et ;
[Fig.3] illustrent des modes de réalisation et de mise en œuvre de l'invention.

La portée de l'invention est définie par les revendications indépendantes.

La figure 1 illustre schématiquement un exemple de réalisation d'un système sur puce SOC, tel que par exemple un microcontrôleur ou un microprocesseur, comportant un dispositif maître CPU, et un contrôleur de mémoire CNTMEM destinée à piloter des accès à une mémoire MEM, par exemple une mémoire externe non-volatile « Flash » ou « EEPROM ».

La mémoire MEM est par exemple connectée au contrôleur de mémoire CNTMEM du système sur puce SOC, via une interface d'entrées-sorties IOS.

Le dispositif maître CPU peut par exemple être un processeur ou une unité centrale de calculs (pour « Central Processing Unit » en anglais), adapté pour mettre en œuvre des fonctionnalités logicielles ; ou bien un dispositif maître du type moyen d'accès direct en mémoire « DMA » (pour « Direct Memory Access » en anglais).

Le dispositif maître CPU est par exemple à l'origine des accès à la mémoire MEM, par des transactions TR1, TR2 communiquées sur un bus d'interconnexion BUS au contrôleur de mémoire CNTMEM.

Le bus d'interconnexion BUS peut par exemple être un bus du type « AXI » pour « Advanced eXtensible Interface » en anglais, ou du type « AHB » pour « Advanced High-performance Bus » en anglais, qui sont des types de bus de microcontrôleur « AMBA » pour « Advanced Microcontroller Bus Architecture ».

Chaque transaction TR1, TR2 contient des informations de transaction TINF définissant un accès respectif à la mémoire MEM. Les informations de transaction TINF peuvent par exemple contenir une information du type d'accès cmd en lecture, en écriture ou éventuellement en effacement ; une identification de la région mémoire MEM avec une adresse de début addr et une taille dlen ; des données data en écriture ; et d'autres informations de transaction « status », « ctrl ».

Par ailleurs, on considère que pour accéder à la mémoire MEM, il existe un premier type de transaction TR1 basé sur une commande communiquée au contrôleur CNTMEM ; et un deuxième type de transaction TR2 basé sur une adresse ou une région de la mémoire, par exemple en fonction d'une partition (ou « mappage ») de la mémoire MMAP (usuellement « memory map » en anglais).

Par exemple, un premier pare-feu RISUP peut être prévu pour autoriser ou restreindre les accès au contrôleur CNTMEM par des transactions du premier type TR1, c'est-à-dire en fonction des droits d'accès à la mémoire du dispositif maître CPU vis-à-vis d'un contexte d'exécution ; et un deuxième pare-feu RISAF peut être prévu pour autoriser ou restreindre les accès au contrôleur CNTMEM par des transactions du deuxième type TR2, c'est-à-dire en fonction des droits d'accès à respectivement chaque régions mémoire MMAP par le dispositif maître CPU.

Cela étant, les deux types de transactions TR1, TR2 contiennent lesdites informations de transaction TINF qui définissent l'accès.

Dans les deux cas également, le contrôleur de mémoire CNTMEM est configuré pour stocker les informations de transaction TINF dans un registre de commande REG, et pour piloter l'accès à la mémoire MEM à partir du contenu dudit registre de commande REG.

En outre, le contrôleur de mémoire CNTMEM comporte, en interne, des moyens de vérification CMP configurés pour conditionner l'accès effectif ACC à la mémoire MEM, en fonction d'une comparaison entre les informations de transaction stockées dans le registre de commande REG et une liste d'informations spéciales LST.

Chaque information spéciale de la liste LST définit par exemple une transaction interdite, ou un accès ACC interdit à la mémoire MEM.

Par exemple, les moyens de vérification CMP sont configurés à cet égard pour bloquer l'accès DEN si au moins l'une desdites informations de transaction stockées dans le registre de commande REG appartient à ladite liste d'informations interdites LST.

En alternative, chaque information spéciale de la liste LST définit par exemple une transaction autorisée, ou un accès ACC autorisé à la mémoire MEM.

Par exemple, les moyens de vérification CMP sont configurés à cet égard pour bloquer l'accès DEN si au moins l'une desdites informations de transaction stockées dans le registre de commande REG n'appartient pas à ladite liste d'informations autorisées LST.

Selon le choix de conception (notamment l'exhaustivité) de la liste d'informations spéciales, les moyens de vérification CMP peuvent être configurés pour bloquer l'accès DEN si aucunes desdites informations de transaction stockées dans le registre de commande REG n'appartient à ladite liste d'informations autorisées LST.

Avantageusement, les moyens de vérification CMP sont configurés pour effectuer ledit conditionnement de l'accès à la mémoire en fonction du niveau de sécurité du système sur puce SOC_LVL ; et par exemple la liste d'informations spéciales LST peut être faite respectivement pour chaque niveau de sécurité possible SOC_LVL du système sur puce SOC.

A cet égard, chaque élément de la liste LST est par exemple lié à une identification du niveau de sécurité r_lvl, d_lvl (figure 2).

Le niveau de sécurité du système sur puce SOC_LVL est par exemple communiqué par un bus interne dédié matériellement et de façon centralisée pour système sur puce SOC. On notera en particulier que le niveau de sécurité SOC_LVL n'est pas modifiable par une programmation logicielle.

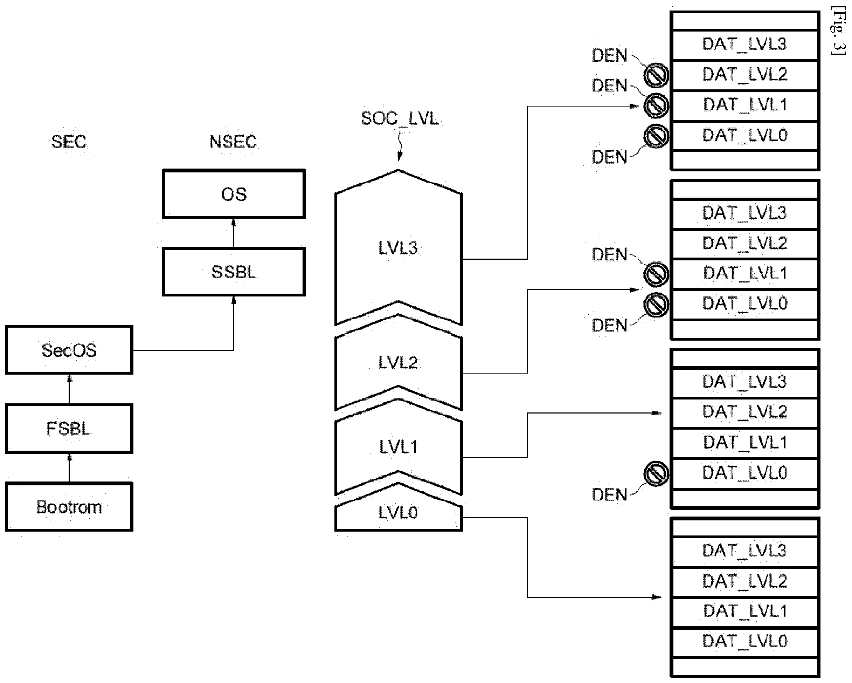

Le niveau de sécurité SOC_LVL (ou LVL0-LVL3 - figure 3) correspond par exemple en pratique à un niveau de sécurité évolutif qui est automatiquement modifié dans l'avancée du processus de démarrage, de façon à avoir des accès de plus en plus restreints. Par exemple, le niveau de sécurité évolue temporellement de façon à bloquer les accès aux régions mémoires contenant des informations du processus de démarrage, dès que ces informations ont été utilisées dans le processus de démarrage.

On notera par ailleurs que le niveau de sécurité évolutif SOC_LVL, ne correspond pas aux contextes « sécurisé » ou « non-sécurisé », ni aux contextes « privilégiés » ou « non-privilégiés », qui sont conventionnellement filtrés par les pares-feux RISUP, RISAF. En effet, les contextes sécurisé/privilégiés sont typiquement attribués pour chaque dispositif (maître, ressource, périphérique...), éventuellement de façon commandée par un mécanisme logiciel de gestion des droits d'accès.

La liste d'informations spéciales LST est établie sur au moins l'un des types d'informations de transaction suivants : une commande préétablie d'une action dans la mémoire cmd ; une adresse de région mémoire addr ; une taille de région mémoire dlen.

Dans un premier exemple, illustré par la figure 1, chaque élément de la liste d'informations spéciales LST inclut une adresse de début de région mémoire r_addr et une taille de région mémoire r_dlen.

Ainsi, dans ce premier exemple, on a intégré les moyens de vérification CMP supplémentaires, directement en interne dans le contrôleur de mémoire CNTMEM. Les moyens de vérification CMP offrent une protection supplémentaire du type pare-feu, sur un nombre N de régions (en fonction du produit) de la mémoire MEM.

Chaque région est ainsi définie par une adresse r_addr et une longueur r_dlen, selon la mémoire externe le protocole utilisé (par exemple il peut s'agir d'une adresse brute, d'une adresse de page ou d'une adresse de bloc) ; ainsi que par le niveau de sécurité r_ lvl autorisé le plus bas, ou bien le premier niveau non-autorisé r_lvl en fonction de la logique souhaitée.

La configuration des régions dans la liste LST peut être verrouillée pour ne jamais être reconfigurée ou surchargée par un autre composant logiciel.

Quel que soit le type transaction TR1, TR2 (par transmission d'une commande ou par un accès via une segmentation/mappage) l'adresse de la transaction addr, chargée dans le registre de commande REG est comparée aux adresses r_addr contenues dans la liste LST. Si l'adresse addr appartient à une région de la liste LST, le niveau de sécurité courant du système sur puce SOC_LVL est comparé au niveau de sécurité r_lvl qui correspond à l'adresse identifiée « r_addr⊂addr ». Si le niveau de sécurité courant SOC_LVL est supérieur à celui de la région identifiée r_lvl, la transaction est autorisée ACC, sinon elle est bloquée, ou rejetée, DEN et le contrôleur de mémoire CNTMEM peut renvoyer une erreur.

Le même processus de vérification peut être fait pour la dernière adresse de la transaction, égale à l'adresse de début ajouté de la longueur des données addr+dlen. Si la dernière adresse de la transaction est en dehors de toutes les régions de la liste LST, alors la transaction est autorisée ACC.

La figure 2 illustre un deuxième exemple, dans lequel chaque élément de la liste d'informations spéciales LST comporte une commande préétablie d'une action dans la mémoire d_cmd.

Dans le deuxième exemple, on a là-aussi intégré les moyens de vérification CMP supplémentaires directement en interne dans le contrôleur de mémoire CNTMEM, afin d'offrir une protection supplémentaire du type pare-feu ou « liste noire » (liste de commandes interdites), ou « liste blanche » (liste de commandes autorisées), sur un nombre M de commandes (en fonction du produit).

Les commandes préétablies d_cmd peuvent par exemple être codées sur 8 bits, selon la mémoire externe ou le protocole utilisé. Par exemple, il peut s'agir de commandes d'effacement de secteurs de la mémoire, voire de la mémoire en entier. La région à protéger peut être différente du secteur de la mémoire impacté par la commande, étant donné que ces commandes peuvent être envoyées avec une adresse addr ne correspondant pas à la région à protéger DAT_LVL0-DAT_LVL3 (dans le cas de la figure 1), tout en ayant un impact sur la région à protéger, par exemple DAT_LVL0, typiquement lorsque la région à protéger est située à l'intérieur du secteur.

Chaque commande de la liste d_cmd est liée au niveau de sécurité r_lvl autorisé le plus bas, ou bien le premier niveau non-autorisé r_lvl en fonction de la logique souhaitée.

La configuration des commandes dans la liste LST peut être verrouillée pour ne jamais être reconfigurée après l'initialisation pour s'assurer que personne ne la modifiera pendant l'exécution.

Quel que soit le type transaction TR1, TR2 (par commande ou par identification d'une segmentation/mappage) l'information de transaction qui définit une commande cmd, c'est-à-dire une action en mémoire, située dans le registre de commande REG, est comparée aux commandes spéciales d_cmd contenues dans la liste LST.

Si l'information de transaction qui définit la commande cmd appartient à la liste LST, le niveau de sécurité courant du système sur puce SOC_LVL est comparé au niveau de sécurité d_lvl qui correspond à la commande identifiée « cmd=d_cmd ».

Dans une alternative où la liste de commandes spéciales LST contient des commandes interdites d_cmd, si le niveau de sécurité courant SOC_LVL est inférieur (c'est-à-dire ayant des accès plus restreints) à celui de la commande identifiée d_lvl, alors la transaction est bloquée ou rejetée DEN, et le contrôleur de mémoire CNTMEM peut renvoyer une erreur.

Dans le cas contraire, si le niveau de sécurité courant SOC_LVL est supérieur (c'est-à-dire a plus de permission) à celui de la commande identifiée d_lvl, ou si l'information de transaction qui définit la commande cmd n'appartient pas à la liste de commandes interdites LST, alors la commande cmd est autorisée et la transaction est exécutée normalement, c'est-à-dire que le contrôleur de mémoire CNTMEM pilote l'accès ACC à la mémoire MEM.

Dans une autre alternative où la liste de commandes spéciales LST contient des commandes autorisées d_cmd, si le niveau de sécurité courant SOC_LVL est supérieur ou égal (c'est-à-dire a la permission équivalente ou plus) à celui de la commande identifiée d_lvl, alors la commande cmd est autorisée et la transaction est exécutée normalement, c'est-à-dire que le contrôleur de mémoire CNTMEM pilote l'accès ACC à la mémoire MEM.

Dans le cas contraire, si le niveau de sécurité courant SOC_LVL est inférieur (c'est-à-dire ayant des accès plus restreints) à celui de la commande identifiée d_lvl, ou si l'information de transaction qui définit la commande cmd n'appartient pas à la liste de commandes autorisées LST, est bloquée ou rejetée DEN, et le contrôleur de mémoire CNTMEM peut renvoyer une erreur.

La liste des commandes spéciales LST peut être un simple ensemble de registres. Le nombre « M » de registres dépend des besoins du produit.

La figure 3 illustre un exemple de processus de démarrage du système sur puce SOC, tel que décrit ci-avant en relation avec les figures 1 et 2, au cours duquel un niveau de sécurité du système sur puce LVL0-LVL3, évolue au fur et à mesure de l'avancée du processus de démarrage.

En particulier, on rappelle que le niveau de sécurité LVL0-LVL3 (ou SOC_LVL - figures 1 et 2) évolue temporellement de façon à avoir des accès de plus en plus restreints, notamment de façon à bloquer les accès aux régions mémoires contenant des informations du processus de démarrage, dès que ces informations ont été utilisées dans le processus de démarrage.

On notera que dans cet exemple, les valeurs numériques représentatives des niveaux de sécurité LVL0-LVL3 sont incrémentées au fur et à mesure que le niveau de sécurité baisse, c'est-à-dire au fur et à mesure que le contexte a de moins en moins de permissions d'accès.

Ainsi par exemple, lors d'une étape d'initialisation de démarrage Bootrom le code de démarrage initial est chargé depuis un emplacement fixe de la mémoire externe MEM immédiatement disponible pour le processeur lorsque l'exécution commence, par exemple l'emplacement DAT_LVL0.

Dans le contexte de cette toute première étape Bootrom, le niveau de sécurité LVL0 a le plus de permissions d'accès possible, et toutes les régions mémoires DAT_LVL0-DAT_LVL3 (et donc tous les éventuels secrets qu'elles contiennent) sont accessibles.

Ensuite, par exemple une étape FSBL dite première phase de démarrage (usuellement « first stage bootloader » en anglais) est mise en œuvre.

Dans le contexte de cette première phase de démarrage FSBL, le niveau de sécurité LVL1 correspond à un niveau sécurisé de démarrage, dans lequel les secrets de l'étape d'initialisation de démarrage Bootrom ne sont plus utilisé, et sont donc cachées. A cet effet, l'accès à la région mémoire DAT_LVL0 correspondant au contexte Bootrom est bloqué DEN. Les autres régions mémoires DAT_LVL1-DAT_LVL3 sont accessibles.

Ensuite, par exemple une étape SecOS d'exécution d'un système d'exploitation sécurisé est mise en œuvre.

Dans le contexte du système d'exploitation sécurisé SecOS, le niveau de sécurité LVL2 correspond à un niveau sécurisé, dans lequel les secrets de la première phase de démarrage FSBL, tels que des clés spécifiques, ne sont plus utilisé, et sont donc cachées. A cet effet, l'accès à la région mémoire DAT_LVL1 correspondant au contexte FSBL est bloqué DEN. L'accès à la région mémoire DAT_LVL0 du contexte Bootrom est toujours bloqué DEN. Les autres régions mémoires DAT_LVL2-DAT_LVL3 sont accessibles.

Ensuite, par exemple des étapes SSBL, OS correspondant à un contexte non-sécurisé NSEC sont mises en œuvre.

Dans le contexte non-sécurisé NSEC, le niveau de sécurité LVL3 correspond à un niveau non-sécurisé, dans lequel seuls les « secrets » utilisable par le système d'exploitation non-sécurisé OS sont accessibles. A cet effet, l'accès à la région mémoire DAT_LVL2 correspondant au contexte SecOS est bloqué DEN. L'accès aux régions mémoire DAT_LVL0-DAT_LVL1 des contextes précédents FSBL, Bootrom sont toujours bloqués DEN. La région mémoire DAT_LVL3 est accessible.

Bien entendu, le processus de démarrage décrit ci-dessus correspond à un exemple simplifié, à vocation illustrative.

En résumé, il a été décrit des modes de réalisation et de mise en œuvre d'un mécanisme interne au contrôleur de mémoire CNTMEM, pour mettre en œuvre des protections supplémentaires de régions mémoires sensibles DAT_LVL0-DAT_LVL3, au moyen de la liste de transactions interdites ou autorisées LST, additionnellement à des éventuels pares-feux RISUP-RISAF conventionnels du système sur puce SOC. Cette protection supplémentaire CMP peut ainsi permettre de compléter un manque dans la protection, notamment dans le cadre du processus de démarrage, et en outre de manière adaptable à tous type de produit.

## Revendications

1. Système sur puce (SOC) comportant un contrôleur de mémoire (CNTMEM) adapté pour recevoir des transactions (TR1, TR2) contenant des informations de transaction (TINF) définissant un accès à une mémoire (MEM), le contrôleur de mémoire (CNTMEM) étant configuré pour stocker les informations de transaction dans un registre de commande (REG), et pour piloter l'accès à la mémoire (MEM) à partir du contenu dudit registre de commande (REG), dans lequel le contrôleur de mémoire (CNTMEM) comporte des moyens de vérification (CMP) configurés pour conditionner l'accès à la mémoire en fonction d'une comparaison entre les informations de transaction stockées dans le registre de commande (REG) et une liste d'informations spéciales (LST) définissant des transactions spéciales ;
dans lequel les moyens de vérification (CMP) sont configurés pour recevoir un niveau de sécurité du système sur puce (SOC_LVL), et pour effectuer ledit conditionnement de l'accès à la mémoire en fonction du niveau de sécurité du système sur puce ;
et dans lequel la liste d'informations spéciales (LST) définissant des transactions spéciales est faite respectivement pour chaque niveau de sécurité possible (SOC_LVL) du système sur puce.

2. Système sur puce selon la revendication 1, dans lequel les moyens de vérification (CMP) sont configurés pour effectuer ledit conditionnement de sorte que l'accès est bloqué (DEN) si au moins l'une desdites informations de transaction stockées dans le registre de commande (REG) appartient à ladite liste d'informations spéciales (LST), ou bien si au moins l'une desdites informations de transaction stockées dans le registre de commande (REG) n'appartient pas à ladite liste d'informations spéciales (LST).

3. Système sur puce selon l'une des revendications 1 ou 2, dans lequel la liste d'informations spéciales (LST) est établie sur au moins l'un des types d'informations de transaction suivants : une commande préétablie d'une action dans la mémoire (cmd) ; une adresse de région mémoire (addr) ; une taille de région mémoire (dlen).

4. Procédé de contrôle d'une mémoire, mis en œuvre par un contrôleur de mémoire (CNTMEM) d'un système sur puce, comprenant une réception de transactions (AC1, AC2) contenant des informations de transaction (TINF) définissant un accès respectif à la mémoire (MEM), un stockage des informations de transaction reçues dans un registre de commande (REG), l'accès à la mémoire étant piloté à partir du contenu dudit registre de commande, le procédé comprenant en outre un conditionnement de l'accès à la mémoire en fonction d'une comparaison (CMP) entre les informations de transaction (TINF) stockées dans le registre de commande (REG) et une liste d'informations spéciales (LST) définissant des transactions spéciales ;
le procédé comprenant une réception d'un niveau de sécurité du système sur puce (SOC_LVL), et dans lequel ledit conditionnement de l'accès est effectué en fonction du niveau de sécurité du système sur puce ;
dans lequel la liste d'informations spéciales (LST) définissant des transactions spéciales est faite respectivement pour chaque niveau de sécurité possible (SOC_LVL) du système sur puce.

5. Procédé selon la revendication 4, dans lequel ledit conditionnement est effectué de sorte que l'accès est bloqué (DEN) si au moins l'une desdites informations de transaction stockées dans le registre de commande (REG) appartient à ladite liste d'informations spéciales (LST), ou bien si au moins l'une desdites informations de transaction stockées dans le registre de commande (REG) n'appartient pas à ladite liste d'informations spéciales (LST).

6. Procédé selon l'une des revendications 4 ou 5, dans lequel la liste d'informations spéciales (LST) est établie sur au moins l'un des types d'informations de transaction suivants : une commande préétablie d'une action dans la mémoire (cmd) ; une adresse de région mémoire (addr) ; une taille de région mémoire (dlen).

## Patentansprüche

1. System-on-Chip (SOC), umfassend einen Speichercontroller (CNTMEM), der geeignet ist, Transaktionen (TR1, TR2) zu empfangen, die Transaktionsinformationen (TINF) enthalten, die einen Zugriff auf einen Speicher (MEM) definieren, wobei der Speichercontroller (CNTMEM) so konfiguriert ist, dass er die Transaktionsinformationen in einem Befehlsregister (REG) speichert und den Zugriff auf den Speicher (MEM) anhand des Inhalts des Befehlsregisters (REG) steuert, wobei der Speichercontroller (CNTMEM) Verifizierungsmittel (CMP) umfasst, die so konfiguriert sind, dass sie den Zugriff auf den Speicher basierend auf einem Vergleich zwischen den in dem Befehlsregister (REG) gespeicherten Transaktionsinformationen und einer Liste mit speziellen Informationen (LST), die spezielle Transaktionen definiert, konditionieren;
wobei die Verifizierungsmittel (CMP) so konfiguriert sind, dass sie eine Sicherheitsstufe des System-on-Chips (SOC_LVL) empfangen und das Konditionieren des Zugriffs auf den Speicher in Abhängigkeit von der Sicherheitsstufe des System-on-Chips durchführen;
und wobei die Liste mit speziellen Informationen (LST), die spezielle Transaktionen definiert, jeweils für jede mögliche Sicherheitsstufe (SOC_LVL) des System-on-Chips erstellt wird.

2. System-on-Chip nach Anspruch 1, wobei die Verifizierungsmittel (CMP) so konfiguriert sind, dass sie das Konditionieren durchführen, so dass der Zugriff gesperrt (DEN) wird, wenn mindestens eine der in dem Befehlsregister (REG) gespeicherten Transaktionsinformationen zu der Liste mit speziellen Informationen (LST) gehört oder wenn mindestens eine der in dem Befehlsregister (REG) gespeicherten Transaktionsinformationen nicht zu der Liste mit speziellen Informationen (LST) gehört.

3. System-on-Chip nach einem der Ansprüche 1 oder 2, wobei die Liste mit speziellen Informationen (LST) auf mindestens einer der folgenden Arten von Transaktionsinformationen festgelegt ist: einen vorher festgelegten Befehl für eine Aktion in dem Speicher (cmd); eine Speicherbereichsadresse (addr); eine Speicherbereichsgröße (dlen).

4. Verfahren zur Steuerung eines Speichers, das durch einen Speichercontroller (CNTMEM) eines System-on-Chips implementiert wird, umfassend das Empfangen von Transaktionen (AC1, AC2), die Transaktionsinformationen (TINF) enthalten, die einen jeweiligen Zugriff auf den Speicher (MEM) definieren, Speichern der empfangenen Transaktionsinformationen in einem Befehlsregister (REG), wobei der Zugriff auf den Speicher anhand des Inhalts des Befehlsregisters gesteuert wird, wobei das Verfahren ferner das Konditionieren des Zugriffs auf den Speicher basierend auf einem Vergleich (CMP) zwischen den in dem Befehlsregister (REG) gespeicherten Transaktionsinformationen (TINF) und einer Liste mit speziellen Informationen (LST), die spezielle Transaktionen definiert, umfasst;
wobei das Verfahren das Empfangen einer Sicherheitsstufe des System-on-Chips (SOC_LVL) umfasst, und wobei das Konditionieren des Zugriffs in Abhängigkeit von der Sicherheitsstufe des System-on-Chips durchgeführt wird;
wobei die Liste mit speziellen Informationen (LST), die spezielle Transaktionen definiert, jeweils für jede mögliche Sicherheitsstufe (SOC_LVL) des System-on-Chips erstellt wird.

5. Verfahren nach Anspruch 4, wobei das Konditionieren so durchgeführt wird, dass der Zugriff gesperrt (DEN) wird, wenn mindestens eine der in dem Befehlsregister (REG) gespeicherten Transaktionsinformationen zu der Liste mit speziellen Informationen (LST) gehört oder wenn mindestens eine der in dem Befehlsregister (REG) gespeicherten Transaktionsinformationen nicht zu der Liste mit speziellen Informationen (LST) gehört.

6. Verfahren nach einem der Ansprüche 4 oder 5, wobei die Liste mit speziellen Informationen (LST) auf mindestens einer der folgenden Arten von Transaktionsinformationen festgelegt ist: einen vorher festgelegten Befehl für eine Aktion in dem Speicher (cmd); eine Speicherbereichsadresse (addr); eine Speicherbereichsgröße (dlen).

## Claims

1. System on Chip (SoC) comprising a memory controller (CNTMEM) adapted to receive transactions (TR1, TR2) containing transaction information (TINF) defining access to a memory (MEM), the memory controller (CNTMEM) being configured to store the transaction information in a command register (REG), and to control access to the memory (MEM) from the content of said command register (REG), wherein the memory controller (CNTMEM) comprises verification means (CMP) configured to condition access to the memory as a function of a comparison between the transaction information stored in the command register (REG) and a list of special information (LST) defining special transactions;
wherein the verification means (CMP) are configured to receive a security level of the System on Chip (SOC_LVL) and to perform said conditioning of the access to the memory according to the security level of the System on Chip;
and wherein the list of special information (LST) defining special transactions is made respectively for each possible security level (SOC_LVL) of the System on Chip.

2. System on Chip according to claim 1, wherein the verification means (CMP) are configured to perform said conditioning so that access is blocked (DEN) if at least one of said pieces of transaction information stored in the command register (REG) belongs to the list of special information (LST), or if at least one piece of transaction information stored in the command register (REG) does not belong to said list of special information (LST).

3. System on Chip according to any one of claims 1 or 2, wherein the list of special information (LST) is established on at least one of the following types of transaction information: a pre-established command for an action in the memory (cmd); a memory region address (addr); a memory region size (dlen).

4. Method for controlling a memory, implemented by a memory controller (CNTMEM) of a System on Chip, comprising receiving transactions (AC1, AC2) containing transaction information (TINF) defining a respective access to the memory (MEM), storing the transaction received information in a command register (REG), the access to the memory being driven on the basis of the content of said command register, the method further comprising conditioning the access to the memory as a function of a comparison (CMP) between the transaction information (TINF) stored in the command register (REG) and a list of special information (LST) defining special transactions;
the method comprising the reception of a security level of the System on Chip (SOC_LVL), and wherein said conditioning of the access is performed according to the security level of the System on Chip;
wherein the list of special information (LST) defining special transactions is made respectively for each possible security level (SOC_LVL) of the System on Chip.

5. Method according to claim 4, wherein said conditioning is carried out so that access is blocked (DEN) if at least one of said pieces of transaction information stored in the command register (REG) belongs to the list of special information (LST), or if at least one piece of transaction information stored in the command register (REG) does not belong to said list of special information (LST).

6. Method according to any one of claims 4 or 5, wherein the list of special information (LST) is established on at least one of the following types of transaction information: a pre-established command for an action in the memory (cmd); a memory region address (addr); a memory region size (dlen).
